# EUROPEAN PATENT APPLICATION

(11) **EP 4 657 048 A1**
(43) Date of publication of application: **03.12.2025**
(21) Application number: 25175645.8
(22) Date of filing: 12.05.2025
(51) Int. Cl.: G01N 21/88, G01B 11/24, G01N 21/95

(54) **DETECTION MODULE, DETECTION DEVICE, DETECTION SYSTEM, AND DETECTION METHOD**

(30) Priority: 27.05.2024 CN 202410666749
(71) Applicant: Airbus (S.A.S.), 31700 Blagnac (FR)
(72) Inventor: HUANG, Jinming, 101312 Beijing (CN)
(74) Representative: Abel & Imray LLP

(57) **Abstract**

Disclosed are a detection module (10), a detection device, a detection system, and a detection method. The detection module includes: a scanning unit (11) configured to perform 3D scanning on a detected surface and comprising a laser projecting device including a laser source (111) and at least two MEMS micro scanning mirrors (1131,1132) configured to reflect laser emitted by the laser source onto the detected surface, and a laser receiving device (114) configured to receive the reflected laser from the detected surface to obtain at least two laser images of the detected surface; a RGB image sensor (12) configured to capture a RGB image of the detected surface; and a processor (13) connected to the scanning unit and the RGB image sensor, and configured to stitch the at least two laser images, and detect a defect of the detected surface based on the stitched laser image and the RGB image.

## Description

This application claims priority to Chinese Patent Application No. 202410666749.3, titled "DETECTION MODULE, DETECTION DEVICE, DETECTION SYSTEM, AND DETECTION METHOD", filed on May 27, 2024 with the China National Intellectual Property Administration, which is incorporated herein by reference in its entirety.

### FIELD

The present disclosure generally relates to the field of detection and measurement, and more particularly to detection and measurement of damage to a profile, a surface, and the like, of an object.

### BACKGROUND

Three-dimensional (3D) scanning and digitization technology can achieve three-dimensional reconstruction of object profile, and has been widely used in fields such as industrial design, reverse engineering, and detection and measurement. For example, during maintenance and inspection of an aircraft, measurement technology based on 3D scanning can be used for detecting and measuring damages on a profile or surface of the aircraft.

A three-dimensional scanning solution is based on digital light processing (DLP). Disadvantages of this solution includes that the apparatus has a large size and weight, high power consumption and high cost.

There is also a three-dimensional scanning solution based on a micro-electromechanical system (MEMS). A measurement precision of this solution needs to be further improved.

### SUMMARY

Hereinafter provided is a brief summary of the present disclosure, which is intended to provide a basic understanding of aspects of the present disclosure. It should be understood that this summary is not an exhaustive overview of the present disclosure. The summary is not intended to identify key or critical portions of the present disclosure or to delineate the scope of the present disclosure. The purpose is merely to present some concepts in a simplified form, as a prelude to the more detailed description that is presented later.

According to an aspect of the present disclosure, a detection module is provided. The detection module includes: a scanning unit configured to perform 3D scanning on a detected surface and comprising a laser projecting device including a laser source and at least two MEMS micro scanning mirrors configured to reflect laser emitted by the laser source onto the detected surface, and a laser receiving device configured to receive the reflected laser from the detected surface to obtain at least two laser images of the detected surface; a RGB image sensor configured to capture a RGB image of the detected surface; and a processor connected to the scanning unit and the RGB image sensor, and configured to stitch the at least two laser images, and detect a defect of the detected surface based on the stitched laser image and the RGB image.

According to a preferred embodiment, the laser projecting device further includes an optical element arranged between the laser source and the MEMS micro scanning mirrors, and the laser emitted from the laser source is incident onto the MEMS micro scanning mirrors via the optical element.

According to a preferred embodiment, the laser receiving device includes a first laser receiver and a second laser receiver.

According to a preferred embodiment, the detection module further includes a pattern projecting device connected to the processor and configured to project a configurable laser pattern towards an area where the defect is located based on different types of defects detected by the processor on the detected surface.

According to a preferred embodiment, the detection module further includes: a light filling device configured to selectively illuminate the detected surface; and a display unit connected to the processor and configured to display a detection result of the detected surface.

According to a preferred embodiment, the processor is further configured to: detect whether the RGB image captured by the RGB image sensor is overexposed; trigger a high dynamic range mode of the RGB image sensor in a case where the RGB image is overexposed; combine a high exposure RGB image and a low exposure RGB image captured in the high dynamic range mode; and detect the defect on the detected surface based on the combined RGB image and the stitched laser image.

According to a preferred embodiment, the detecting whether the RGB image captured by the RGB image sensor is overexposed further includes: detecting whether a light intensity in the RGB image is greater than a predetermined threshold, and determining that the RGB image is overexposed in a case where the light intensity in the RGB image is greater than the predetermined threshold.

According to a preferred embodiment, the processor is further configured to: determine a type and size of the defect based on a three-dimensional coordinate of the defect in a coordinate system of a detected object, and generate a detection report.

According to another aspect of the present disclosure, a detection device is provided. The detection device includes: the above-described detection module; and a housing including a housing body, where the detection module is accommodated in the housing body.

According to a preferred embodiment, the housing further includes a bracket portion extending from the housing body and adapted to abut against the detected surface.

According to a preferred embodiment, the bracket portion is configured to be removably secured to the housing body.

According to a preferred embodiment, the bracket portion is secured to the housing body through a buckling mechanism or through a magnetic attraction.

According to a preferred embodiment, the housing further includes a hand-held portion, and the hand-held portion is angled with a direction perpendicular to the housing body.

According to a preferred embodiment, the hand-held portion further includes a removable embedded battery.

According to yet another aspect of the present disclosure, a detection system is provided. The detection system includes: a cloud platform; an application terminal; and the above-described detection device, where the detection device communicates with the cloud platform and the application terminal.

According to a preferred embodiment, the detection system is configured to automatically generate a maintenance report for the application terminal based on a detection result of the detection device and digital mock-up data of a detected object on the cloud platform.

According to a further aspect of the present disclosure, a detection method is provided. The detection method includes: emitting laser towards a detected surface, where the laser is emitted from a laser source and reflected onto the detected surface via at least two MEMS micro scanning mirrors; receiving, by a laser receiving device, the laser reflected back from the detected surface to obtain at least two laser images of the detected surface; stitching the at least two laser images; obtaining a RGB image of the detected surface through a RGB image sensor; and detecting a defect on the detected surface based on the stitched laser image and the RGB image.

According to a preferred embodiment, the detection method further includes: determining three-dimensional information of the defect; projecting a predetermined laser pattern towards the detected surface based on the three-dimensional information, to highlight an area where the defect is located with the predetermined laser pattern.

According to a preferred embodiment, the detecting of the defect on the detected surface further includes: detecting whether the RGB image is overexposed; triggering a high dynamic range mode (HDR) of the RGB image sensor in a case where the RGB image is overexposed; combining a high exposure RGB image and a low exposure RGB image captured in the high dynamic range mode; and detecting the defect on the detected surface based on the combined RGB image and the stitched laser image.

According to a preferred embodiment, the detecting whether the RGB image is overexposed further includes: detecting whether a light intensity in the RGB image is greater than a predetermined threshold, and determining that the RGB image is overexposed in a case where the light intensity in the RGB image is greater than the predetermined threshold.

According to other aspect of the present disclosure, a computer-readable storage medium having a program stored thereon is provided. The program, when executed by a processor, causes the computer to perform the detection method as described above.

With the detection module, detection device and detection method of the present disclosure, the detection efficiency is improved, the measurement operation is standardized, and the device volume is reduced.

These and other advantages of the present disclosure become more apparent through preferred embodiments of the present disclosure described in detail below in conjunction with accompanying drawings.

It will of course be appreciated that features described in relation to one aspect of the disclosure may be incorporated into other aspects of the disclosure, where appropriate.

### BRIEF DESCRIPTION OF THE DRAWINGS

For a further illustration of the above and other advantages and features of the present disclosure, embodiments of the present disclosure are described in detail hereinafter in conjunction with accompanying drawings. The drawings, together with the detailed description below, are incorporated into and form a part of the specification. Elements having the same function and structure are denoted by same reference signs. It should be noted that the drawings illustrate merely typical examples of the present disclosure and should not be construed as a limitation to the scope of the present disclosure. In the drawings:
Figure 1 shows a schematic structural block diagram of a detection module according to an embodiment of the present disclosure.
Figure 2 schematically shows an inner configuration of a detection module as in Figure 1.
Figure 3 schematically shows stitching of two laser images obtained by two MEMS micro scanning mirrors.
Figure 4 schematically shows a detection device according to an embodiment of the present disclosure.
Figure 5 schematically shows a bracket portion and a buckling mechanism on a housing body of the detection device as in Figure 4.
Figure 6 is a flowchart of a detection method according to an embodiment of the present disclosure.
Figure 7 shows a schematic block diagram of a digital detection system according to the present disclosure.
Figure 8 is a block diagram of an exemplary structure of a universal personal computer in which the method and/or apparatus according to the embodiments of the present disclosure can be implemented.

### DETAILED DESCRIPTION

Exemplary embodiments of the present disclosure are described below in conjunction with the drawings. For the sake of clarity and conciseness, not all features of an actual embodiment are described in the specification. However, it is to be appreciated that numerous implementation-specific decisions shall be made in development of any actual implementations so as to achieve specific objectives of a developer, for example, to comply with system- and business-related constraints, which may vary from one implementation to another. Furthermore, it should be understood that the development work, although may be complicated and time-consuming, is only a routine task for those skilled in the art benefiting from the present disclosure.

Here, it should be further noted that in order to avoid obscuring the present disclosure due to unnecessary details, only apparatus structures and/or processing steps closely related to the solutions according to the present disclosure are illustrated in the drawings, and other details less related to the present disclosure are omitted.

As mentioned above, measurement technology based on 3D scanning is required in the process of maintenance and inspection of an aircraft. In the IATA (International Air Transport Association) ground damage database, most damage reports are related to cargo holds, cargo doors and fuselages. These areas have the most reports of minor damage, and the risk that there are unreported damages for cargo holds and cargo doors is highest. Damage types such as scratches, dents and abrasions are maximum. Therefore, a portable hand-held scanner is widely used in the MRO (maintenance, operations and maintenance) industry.

For a large number of microscopic damages on a profile and surface of an aircraft, there is a need to develop a small-sized digital detection device which improves detection efficiency, standardizes measurement operations, and reduces device volume.

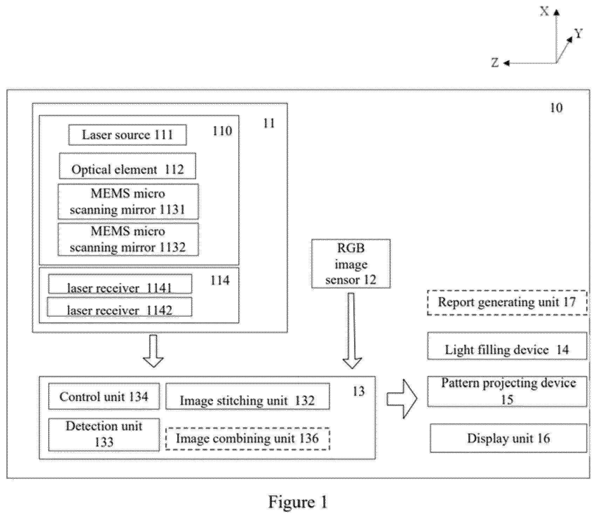

Figure 1 shows a schematic block diagram of a detection module 10 according to an embodiment of the present disclosure. As shown in Figure 1, the detection module 10 includes a scanning unit 11, a RGB image sensor 12, a processor 13, a light filling device 14, a pattern projecting device 15 and a display unit 16.

The scanning unit 11 is configured to perform a three-dimensional scanning on a detected surface of a detected object. The detected surface may be, for example, an outer surface of a fuselage of an aircraft, or a surface of a cargo hold and cargo door of an aircraft. The scanning unit 11 includes a laser projecting device 110 and a laser receiving device 114. The laser projecting device 110 is configured to project laser onto the detected surface of the detected object. The laser projecting device 110 includes a laser source 111, an optical element 112, and at least two MEMS micro scanning mirrors 1131 and 1132. The laser source 111 is configured to emit laser, such as infrared laser in a wavelength range of 0.7µm to 1mm. In an embodiment, the laser source 111 adopts a laser diode. The laser emitted from the laser source 111 is reflected to the detected surface of the detected object through reflective mirror surfaces of the MEMS micro scanning mirrors 1131 and 1132.

The optical element 112 is disposed between the laser source 111 and the MEMS micro scanning mirrors 1131 and 1132. The laser emitted from the laser source 111 is incident on the reflective mirror surfaces of the MEMS micro scanning mirrors 1131 and 1132 through the optical element 112. The optical element 112 may include, for example, a collimating lens. The laser emitted from the laser source 111 is collimated by the collimating lens and then emitted to the MEMS micro scanning mirrors 1131 and 1132.

Optionally, the optical element 112 may further include a cylindrical mirror configured to amplify the collimated laser.

The MEMS micro scanning mirrors 1131 and 1132 are arranged close to the optical element 112, so that the laser emitted from the optical element 112 is completely within a reflection range of the reflective mirrors of the MEMS micro scanning mirrors 1131 and 1132. Thereby, the laser processed by the optical element 112 is reflected to the detected surface. During a scanning process, the reflective surfaces of the MEMS micro scanning mirrors 1131 and 1132 rotate around their rotation axes. The rotation axes of the MEMS micro scanning mirrors 1131 and 1132 are consistent with an extending direction of the laser emitted from the optical element 112. The MEMS micro scanning mirrors 1131 and 1132 may be single-axis micro scanning mirrors or bi-axial micro scanning mirrors. Compared with the conventional mechanical rotating laser scanning device, the size of the laser projecting device 110 is relatively small through providing the MEMS micro scanning mirrors 1131 and 1132 therein, which facilitates miniaturization of the detection module.

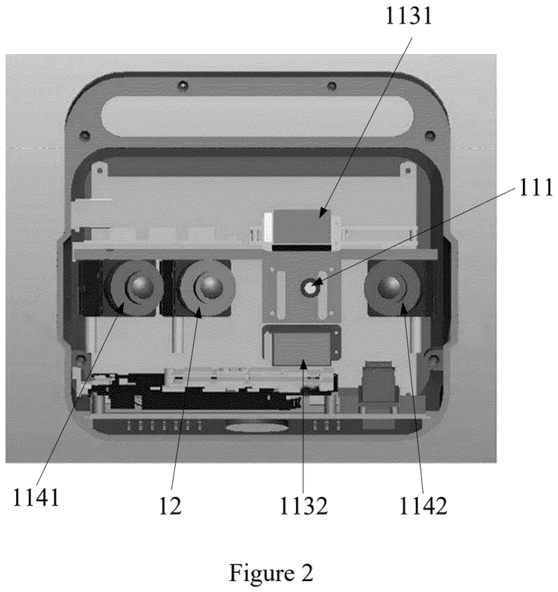

Figure 2 schematically shows a schematic view of an interior of a detection module 10 provided with two MEMS micro scanning mirrors. As shown in Figure 2, the MEMS micro scanning mirrors 1131 and 1132 are arranged on the upper and lower sides of the laser source 111, the RGB image sensor 12 is arranged on the left side of the laser source 111, and the laser receivers 1141 and 1142 are arranged on the left side of the RGB image sensor 12 and the right side of the laser source 111, respectively.

By arranging the two MEMS micro scanning mirrors, two laser images can be obtained. A larger field of view (FOV) can be obtained by stitching the two laser images, thereby improving detection precision and user experience.

It should also be noted that although two MEMS micro scanning mirrors 1131 and 1132 are shown in the figure, the present disclosure is not limited thereto, and more than two MEMS micro scanning mirrors may be provided as needed.

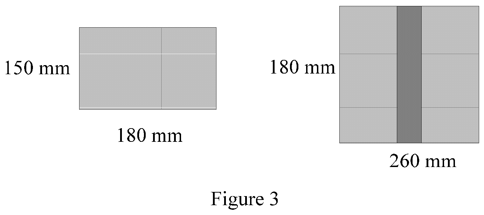

It should also be noted that the two MEMS micro scanning mirrors project laser images onto the detected surface sequentially, and there is an overlapping area between the two projected laser images. As shown in Figure 3, the laser image of one of the MEMS micro scanning mirrors is, for example, 150mm×180mm; and the stitched laser image obtained from the two MEMS micro scanning mirrors is 180mm×260mm.

It should be understood that any existing algorithm can be utilized to realize the stitching of the two laser images, and a size of the overlapping area can be set as needed.

The laser receiver 114 is configured to receive the laser reflected back from the detected surface to obtain a laser image of the detected surface. The laser receiver 114 includes laser receivers 1141 and 1142. The laser receivers 1141 and 1142 are symmetrically arranged with respect to the laser projecting device 110. Hence, the reflected laser from the detected surface is received at both sides of the laser projecting device 110, and thereby the laser images of the detected surface are obtained.

It should be understood that the laser receivers 1141 and 1142 may, for example, adopt CMOS image sensors. However, the present disclosure is not limited thereto, and any suitable device capable of obtaining laser images can be adopted as needed.

The RGB image sensor 12 captures a RGB image of the detected surface.

The processor 13 includes an image stitching unit 132, a detection unit 133 and a control unit 134. The processor 13 may be implemented as an ARM embedded platform, for example. The image stitching unit 132 is configured to stitch two laser images which are received from the laser receiver 114 and obtained by the two MEMS micro scanning mirrors 1131 and 1132. The detection unit 133 is configured to process the stitched laser image and the RGB image captured by the RGB image sensor 12, to determine whether there is a defect (for example, a dent, scratch or other wear) on the detected surface, and determine three-dimensional information of detected defect.

The control unit 134 is configured to communicate with and control the scanning unit 11, the light filling device 14, the pattern projecting device 15 and the display unit 16, respectively. For example, the control unit 134 may control laser emission of the laser source 111, rotation of the MEMS micro scanning mirrors 1131 and 1132, start and stop of the light filling device 14 and the pattern projecting device 15, display content of the display unit 16, and the like.

It should be noted that the processor 13 may further include a memory and an external interface (not shown). The memory may store data acquired from the scanning unit 11 during the scanning detection process (e.g., laser image data, RGB image data, and scanning angle of the MEMS micro scanning mirrors) and detection results. The external interface may be connected with an external device to implement communication between the detection module 10 and the external device. For example, the external device may include an instruction input device (for example, a keyboard or a switch), a terminal operation device (for example, a console of a testing center), a display device, and the like.

It should be understood that the description of the processor 13 is given only as an example, rather than a limitation. In practice, the processor 13 may be configured to include more or fewer devices and/or units as necessary.

The light filling device 14 is connected to the processor 13 and is configured to selectively illuminate the detected surface. In this way, the image of the detected surface become clearer, which facilitates improving processing precision of the processor 13 and thus improving detection precision of the detection module 10. The light filling device 14 may be implemented as a separate device, or may be integrated into the laser receiver 114.

The pattern projecting device 15 is connected to the processor 13 and is configured to project a predetermined laser pattern toward an area where the detected defect is located, based on three-dimensional information (i.e., different shapes) of defects on the detected surface determined by the processor 13. Thereby, the area where the defect is located is highlighted with the predetermined laser pattern, which facilitates an operator to recognize the defect on the display unit 16 or an external display device. For example, the pattern projecting device 15 may project a corresponding laser pattern to a location of the defect according to different shapes of the detected defect, so that the area where the detected defect is located is highlighted with the laser pattern. For example, in a case where it is detected that the defect on the detected surface is a depression, the pattern projecting device 15 may project a circular laser pattern onto the detected surface, encircling the detected depression to highlight the area where the defect is located; and in a case where it is detected that the defect on the detected surface is a scratch, the pattern projecting device 15 projects a triangular laser pattern onto the detected surface, encircling the detected depression to highlight the area where the defect is located. It should be understood that the laser pattern projected by the pattern projecting device 15 is not limited to a circle or a triangle, but may be set to other suitable patterns as necessary, such as a star or a rectangle.

The display unit 16 is configured to display detection information of the detection module 10, such as a detection result. Preferably, the display unit 16 may be configured as a display unit with interactive functions, so that an operating parameter of the detection module 10 may be set by operating the display unit 16. For example, the operating parameter may be an exposure time of the laser receiver 114 and/or the RGB image sensor 12, zooming of a view displayed on the display unit 16, and the like.

An operation process of the detection module 10 shown in Figure 1 is briefly described below.

When the detection module 10 is utilized to detect the detected surface, the laser source 111 of the scanning unit 11 emits infrared laser. The infrared laser emitted by the laser source 111 is incident on the optical element 112 and emitted from the optical element 112 along an X-axis direction. Correspondingly, rotation axes of the MEMS micro scanning mirrors 1131 and 1132 are arranged along the X-axis direction. During a scanning process, the laser emitted from the optical element 112 is reflected onto the detected surface by the rotated MEMS micro scanning mirrors 1131 and 1132, and is reflected from the detected surface to the laser receivers 1141 and 1142. Thereby, laser scanning of the detected surface is implemented.

It should be noted that a plane where the detected surface is located is generally defined by an X-axis and Y-axis, where the X-axis and Y-axis directions constitute a two-dimensional plane of the detected surface, and a direction perpendicular to the detected surface is a Z-axis direction. During the detection process, the scanning unit 11 transmits a scanning parameter to the processor 13 in real time. For example, the scanning parameter is a pulse emission time of the laser source 111, a scanning angle of the MEMS micro scanning mirrors 1131 and 1132, an exposure time of the laser receivers 1141 and 1142, an exposure time of the RGB image sensor 12, and the like, thereby facilitating phase solution and coordinate calibration when processing the obtained laser image and RGB image.

The laser receivers 1141 and 1142 receive the laser reflected back from the detected surface to obtain two laser images of the detected surface formed through the two MEMS micro scanning mirrors. In addition, the RGB image sensor 12 obtains a RGB image of the detected surface. During the scanning process, the light filling device 30 selectively illuminates the detected surface to improve a quality of the two laser images obtained through the laser receivers 1141 and 1142 and a quality of the RGB image obtained through the RGB image sensor 13. Thereby, the detection precision is improved.

According to a preferred embodiment, a filter may be disposed in front of the RGB image sensor 12, to filter out the reflected laser from the detected surface of the detected object. In this way, laser interference on the RGB image acquired by the RGB image sensor 12 is avoided.

The two laser images obtained by the laser receivers 1141 and 1142 and the RGB image obtained by the RGB image sensor 13 are transferred to the processor 13. The image stitching unit 132 of the processor 13 stitches the two laser images. The detection unit 133 determines, based on the spliced laser image and the RGB image, whether there is a defect on the detected surface, a type of the defect present, and a three-dimensional coordinate of the defect in a coordinate system of the detected object. The control unit 134 of the processor 13 controls the display unit 16 to display a detection result based on a processing result of the processor 13. In addition, according to the determined type of the defect, the control unit 134 of the processor 13 controls the pattern projecting device 15 to project a laser pattern onto the detected surface, encircling the defect on the detected surface and highlighting an area where the defect is located. Thereby, the detected defect is recognizable on the display unit 16 or on a terminal device connected to the detection module 10.

According to a preferred embodiment, the processor 13 further includes an image combining unit 136. The image combining unit 136 compares a light intensity in the RGB image captured by the RGB image sensor 12 with a predetermined threshold. In a case where the light intensity in the RGB image is greater than the predetermined threshold, it is determined that the RGB image is overexposed. In this case, the RGB image sensor 12 may be triggered to operate in the high dynamic range (HDR) mode, for example, through the control unit 134. The image combining unit 136 combines a high exposure RGB image and a low exposure RGB image captured in the HDR mode. In this case, the detected unit 133 detects whether there is a defect on the detected surface based on the combined RGB image and the stitched laser image. By combining the high exposure RGB image and the low exposure RGB image, the detection precision of the detection module 10 may be further improved.

It should be understood that the predetermined threshold may be set as needed.

According to a preferred embodiment, the detection module 10 further includes a report generation unit 17. The report generation unit 17 determines a type and size of the defect based on a three-dimensional coordinate of the defect detected on the detected surface in a coordinate system of a detected object, and generates a detection report.

Alternatively, the three-dimensional coordinate of the detected defect in the coordinate system of the detected object may be obtained through a positioning encoding module (not shown). The positioning encoding module may be included in the processor 13 or be external to the processor 13. When located outside the processor 13, the positioning encoding module may provide the processor 13 with the three-dimensional coordinate of the defect in the coordinate system of the detected object such as an aircraft through a wireless connection, such as Bluetooth.

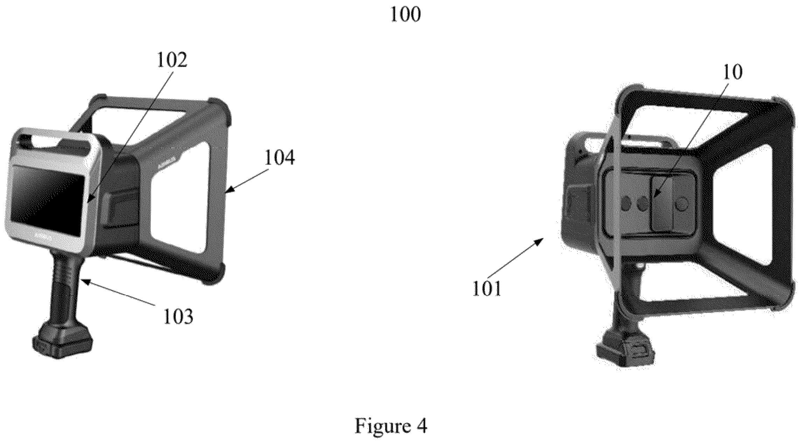

Figure 4 schematically shows a perspective view of a detection device 100 according to an embodiment of the present disclosure viewed from two different viewing angles. As shown in Figure 4, the detection device 100 includes the detection module 10 as shown in Figure 1. The detection device 100 further includes a housing 101. The housing 101 includes a housing body 102 and a hand-held portion 103. The detection module 10 is accommodated in the housing body 102. The hand-held portion 103 is provided for an operator to hold, and a battery of the detection module 10 can be accommodated inside the hand-held portion. According to a preferred embodiment, the battery in the hand-held portion 103 is a removable embedded battery.

The housing 101 further includes a bracket portion 104 extending from the housing body 102. The bracket portion 104 is configured to abut against the detected surface and is removably secured to the housing body 102.

It should be understood that although Figure 4 shows that the bracket portion 104 is a tetrahedron, the present disclosure is not limited thereto, as long as the bracket portion can implement the function of supporting. For example, the bracket portion 104 may have merely two symmetrical sides.

According to a preferred embodiment, the hand-held portion 103 is designed to be offset by a certain angle relative to a direction perpendicular to the housing body 102, where the angle may be, for example, in a range of 5 degrees to 10 degrees. With this design, when the bracket part 104 abuts against the detected surface, the RGB image sensor 13 is not parallel to the detected surface. Therefore, light directly reflected from the detected surface to the RGB image sensor 13 is reduced, and thereby an imaging quality of the RGB image sensor is improved.

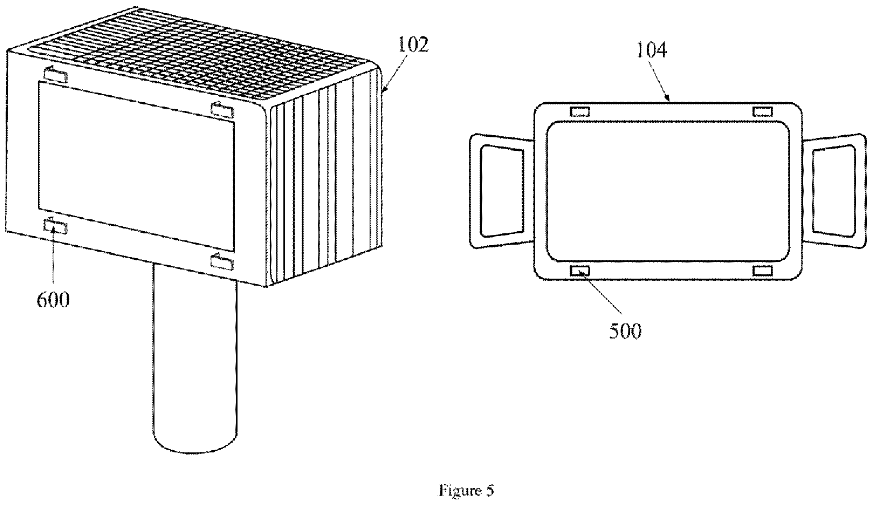

According to a preferred embodiment, the bracket portion 104 may be secured to the housing body 102 through a buckling mechanism. Figure 5 shows an example of the buckling mechanism. As shown in Figure 5, four holes 500 are provided on a frame of the bracket portion 104, and four "L" shaped hooks 600 fit to the holes are provided at corresponding positions on the housing body 102.

It should be understood that although Figure 5 shows rectangular holes and "L" shaped hooks, the present disclosure is not limited thereto, and any suitable shape and number of holes and hooks is possible.

According to another embodiment, the bracket portion 104 may be secured to the housing body 102 through a magnetic attraction, screws and nuts etc..

Since the bracket portion 104 is arranged to be removable from the housing body 102, the detection device 00 has a reduced volume when being carried or transported.

In addition, the housing 101 may be provided with a switch 105. The switch 105 may be connected to a control unit 134 of the processor 13 as shown in Figure 1. The detection module 10 can be started or stopped through an operation on the switch 105.

According to a preferred embodiment, a frame of the bracket portion 104 that is in contact with the detected surface may be made of soft rubber, in order to keep the detection device 100 stable during use.

According to a preferred embodiment, the detection device 100 may receive positioning information of the detected defect relative to a coordinate system of a detected object (such as an aircraft) from an external positioning module through a wireless connection such as Bluetooth, and generate a detection report by using the positioning information.

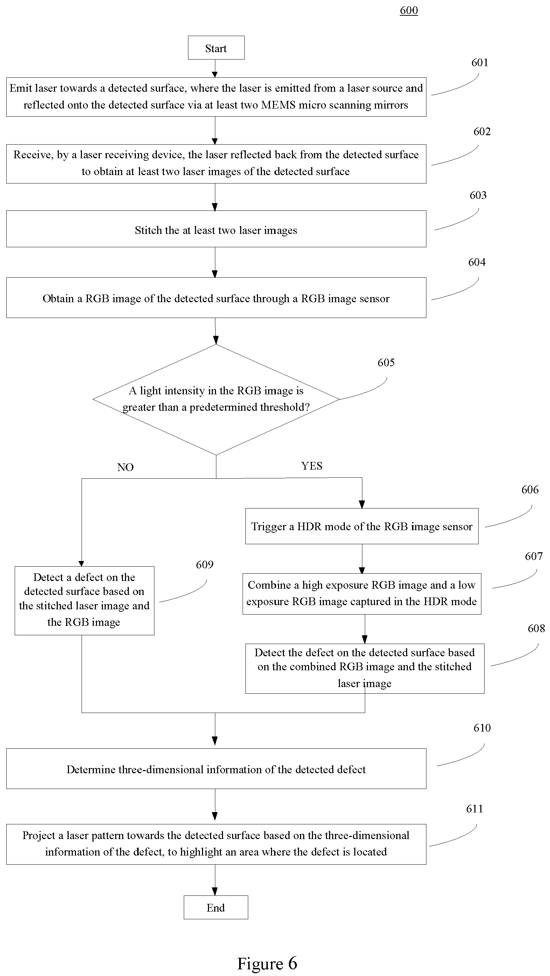

Figure 6 illustrates a flowchart of a detection method according to an embodiment of the present disclosure. The detection method 600 in Figure 6 is described below in conjunction with the detection module 10 in Figure 1.

As shown in Figure 6, firstly, in step 601, laser is emitted towards a detected surface. The laser is emitted from a laser source 111 and reflected onto the detected surface via two MEMS micro scanning mirrors 1131 and 1132.

Next, in step 602, the reflected laser from the detected surface is received by laser receivers 1141 and 1142, to obtain at least two laser images of the detected surface.

Next, in step 603, the at least two laser images are stitched together.

Next, in step 604, a RGB image of the detected surface is obtained through a RGB image sensor 12.

Then, in step 605, it is determined whether a light intensity of the RGB image is greater than a predetermined threshold. That is, it is determined whether the RGB image is overexposed.

If determining that the RGB image is not overexposed, then in step 609, a defect on the detected surface is detected based on the stitched laser image and the RGB image.

If determining that the RGB image is overexposed, then in step 606, a HDR mode of the RGB image sensor 12 is triggered. Next, in step 607, a high exposure RGB image and a low exposure RGB image captured in the HDR mode are combined. Next, in step 608, the defect on the detected surface is detected based on the combined RGB image and the stitched laser image.

Next, in step 610, three-dimensional information of the detected defect is determined.

Finally, in step 611, a laser pattern is projected towards the detected surface based on the three-dimensional information of the defect, to highlight an area where the defect is located.

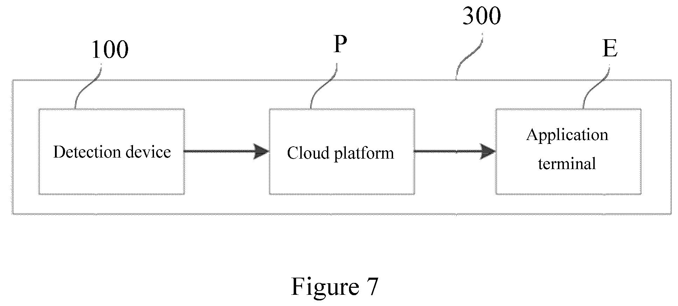

Figure 7 shows a digital detection system 300 which includes the detection device 100 according to the present disclosure, a cloud platform P related to a detected object, and an application terminal E. The detection device 100, the cloud platform P and the application terminal E communicate with each other. For example, the detection device 100 may be wiredly or wirelessly connected to the cloud platform P. The digital detection system 300 can automatically generate a maintenance scheme for the detected object based on a detection result of the detection module 10 and in conjunction with digital mock-up (DMU) data of the detected object, for use by the application terminal E. Therefore, the digital detection system 300 can integrate a digital design, 3D detection, and intelligent maintenance schemes of the detected object, which facilitates improving the operability of standardized measurement.

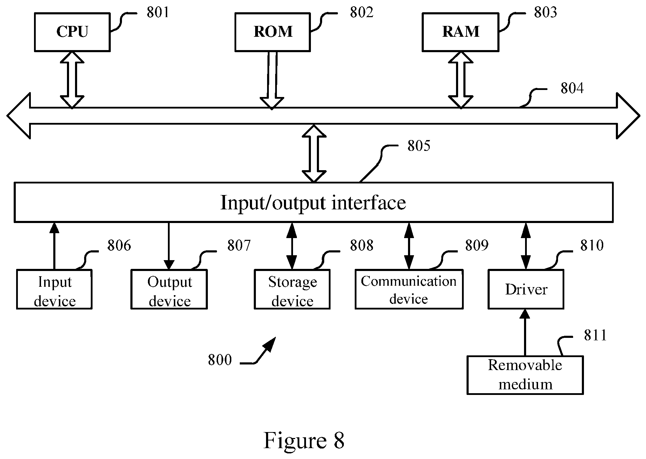

Figure 8 is a block diagram of an exemplary structure of a universal personal computer in which the method and/or apparatus according to the embodiments of the present disclosure can be implemented. As shown in Figure 8, a central processing unit (CPU) 801 of a universal personal computer 800 executes various processes according to a program stored in a read-only memory (ROM) 802 or a program loaded from a storage device 808 to a random access memory (RAM) 803. In the RAM 803, data required for the CPU 801 to perform various processes or the like is stored as necessary. The CPU 801, the ROM 802 and the RAM 803 are connected to each other via a bus 804. An input/output interface 805 is connected to the bus 804.

The following components are connected to the input/output interface 805: an input device 806 (including a keyboard, a mouse, and the like), an output device 807 (including a display, such as a cathode ray tube (CRT) and a liquid crystal display (LCD), a loudspeaker, and the like), a storage device 808 (including a hard disk and the like), and a communication device 809 (including a network interface card such as a LAN card, a modem, and the like). The communication device 809 performs communication processes via a network, such as the Internet. A driver 810 may be connected to the input/output interface 805 as needed. A removable medium 811, such as a magnetic disk, an optical disk, a magnetic optical disk, and a semiconductor memory, is mounted to the driver 810 as required, so that a computer program read therefrom is mounted to the storage device 808 as required.

In a case that the above processes are implemented by software, the program consisting of the software is mounted from a network, such as the Internet, or from a storage medium, such as the removable medium 811.

Those skilled in the art should understood that, the storage medium is not limited to the removable medium 811, as shown in Figure 8, which stores a program and is distributed separately from the apparatus so as to provide the program for a user. Examples of the removable medium 811 includes a magnetic disk (including a soft disk (registered trademark)), an optical disk (including a compact disk read-only memory (CD-ROM) and a Digital Versatile Disk (DVD)), a magneto-optical disk (including a mini disk (MD) (registered trademark)), and a semiconductor memory. Alternatively, the storage medium may be the ROM 802, the hard disk contained in the storage device 808, or the like. The storage medium stores program and is distributed to the user along with an apparatus in which the storage medium is incorporated.

Corresponding computer program codes, and a computer program product storing machine-readable instruction codes are further provided in the present disclosure. The instruction codes, when read and executed by a machine, can implement the detection method according to the embodiments of the present disclosure.

Accordingly, a storage medium configured for carrying the program product storing the machine-readable instruction codes is further included in the present disclosure. The storage medium includes, but is not limited to, a floppy disk, an optical disk, a magneto-optical disk, a storage card, a memory stick, and the like.

A computing apparatus including the storage medium is further included in the present disclosure. For example, a detection device includes a processor and a storage medium storing a program code. The program code, when executed by the processor, implements the detection method according to any of the embodiments of the present disclosure.

From the above description, the embodiments of the present disclosure provide the following technical solutions, which are not limited thereto.

Solution 1. A detection module, comprising:
a scanning unit configured to perform 3D scanning on a detected surface and comprising
   a laser projecting device including a laser source and at least two MEMS micro scanning mirrors configured to reflect laser emitted by the laser source onto the detected surface, and
   a laser receiving device configured to receive the reflected laser from the detected surface to obtain at least two laser images of the detected surface;
a RGB image sensor configured to capture a RGB image of the detected surface; and
a processor connected to the scanning unit and the RGB image sensor, and configured to stitch the at least two laser images, and detect a defect of the detected surface based on the stitched laser image and the RGB image.

Solution 2. The detection module according to solution 1, wherein the laser projecting device further comprises an optical element arranged between the laser source and the MEMS micro scanning mirrors, and the laser emitted from the laser source is incident onto the MEMS micro scanning mirrors via the optical element.

Solution 3. The detection module according to solution 1 or solution 2, wherein the laser receiving device comprises a first laser receiver and a second laser receiver.

Solution 4. The detection module according to any preceding solution, further comprising a pattern projecting device connected to the processor and configured to project a configurable laser pattern towards an area where the defect is located based on different types of defects detected by the processor on the detected surface.

Solution 5. The detection module according to any preceding solution, further comprising:
a light filling device configured to selectively illuminate the detected surface; and
a display unit connected to the processor and configured to display a detection result of the detected surface.

Solution 6. The detection module according to any preceding solution, wherein the processor is further configured to:
detect whether the RGB image captured by the RGB image sensor is overexposed;
trigger a high dynamic range (HDR) mode of the RGB image sensor in a case where the RGB image is overexposed;
combine a high exposure RGB image and a low exposure RGB image captured in the high dynamic range mode; and
detect the defect on the detected surface based on the combined RGB image and the stitched laser image.

Solution 7. The detection module according to solution 6, wherein the detecting whether the RGB image captured by the RGB image sensor is overexposed further comprises:
detecting whether a light intensity in the RGB image is greater than a predetermined threshold, and determining that the RGB image is overexposed in a case where the light intensity in the RGB image is greater than the predetermined threshold.

Solution 8. The detection module according to any preceding solution, wherein the processor is further configured to: determine a type and size of the defect based on a three-dimensional coordinate of the defect in a coordinate system of a detected object, and generate a detection report.

Solution 9. A detection device, comprising:
the detection module according to any one of solutions 1 to 8; and
a housing, wherein the housing comprises a housing body, and the detection module is accommodated in the housing body.

Solution 10. The detection device according to solution 9, wherein the housing further comprises a bracket portion extending from the housing body and adapted to abut against the detected surface.

Solution 11. The detection device according to solution 10, wherein the bracket portion is configured to be removably secured to the housing body.

Solution 12. The detection device according to solution 11, wherein the bracket portion is secured to the housing body through a buckling mechanism or through a magnetic attraction.

Solution 13. The detection device according to any one of solutions 9 to 12, wherein the housing further comprises a hand-held portion, and the hand-held portion is angled with a direction perpendicular to the housing body.

Solution 14. The detection device according to solution 13, wherein the hand-held portion further comprises a removable embedded battery.

Solution 15. A detection system, comprising:
a cloud platform;
an application terminal; and
the detection device according to any one of solutions 9 to 14, wherein the detection device is configured to communicate with the cloud platform and the application terminal.

Solution 16. The detection system according to solution 15, wherein the detection system is configured to automatically generate a maintenance report for the application terminal based on a detection result of the detection device and digital mock-up data of a detected object on the cloud platform.

Solution 17. A detection method, comprising:
emitting laser towards a detected surface, wherein the laser is emitted from a laser source and reflected onto the detected surface via at least two MEMS micro scanning mirrors;
receiving, by a laser receiving device, the laser reflected back from the detected surface to obtain at least two laser images of the detected surface;
stitching the at least two laser images;
obtaining a RGB image of the detected surface through a RGB image sensor; and
detecting a defect on the detected surface based on the stitched laser image and the RGB image.

Solution 18. The detection method according to solution 17, further comprising:
determining three-dimensional information of the defect; and
projecting a predetermined laser pattern towards the detected surface based on the three-dimensional information, to highlight an area where the defect is located with the predetermined laser pattern.

Solution 19. The detection method according to solution 17 or solution 18, wherein the detecting of the defect on the detected surface further comprises:
detecting whether the RGB image is overexposed;
triggering a high dynamic range (HDR) mode of the RGB image sensor in a case where the RGB image is overexposed;
combining a high exposure RGB image and a low exposure RGB image captured in the high dynamic range mode; and
detecting the defect on the detected surface based on the combined RGB image and the stitched laser image.

Solution 20. The detection method according to solution 19, wherein the detecting whether the RGB image is overexposed further comprises:
detecting whether a light intensity in the RGB image is greater than a predetermined threshold, and determining that the RGB image is overexposed in a case where the light intensity in the RGB image is greater than the predetermined threshold.

Finally, it should be noted that terms "include", "comprise" or any other variants are intended to be non-exclusive. Therefore, a process, method, article or device including a series of elements includes not only the elements but also other elements that are not enumerated, or further includes elements inherent to the process, method, article or device. In addition, unless expressively limited otherwise, the statement "comprising (including) a(n)..." does not exclude existence of other similar elements in the process, method, article or device.

Although the embodiments of the present disclosure are described in detail above with reference to the accompanying drawings, it should be understood that the embodiments are configured only for illustrating the present disclosure and do not constitute a limitation of the present disclosure. For those skilled in the art, various modifications and changes can be made to the embodiments without departing from the spirit and scope of the present disclosure. Therefore, the scope of the present disclosure is limited by only the appended claims and equivalents thereof.

## Claims

1. A detection module, comprising:
a scanning unit configured to perform 3D scanning on a detected surface and comprising
a laser projecting device comprising a laser source and at least two MEMS micro scanning mirrors configured to reflect laser emitted by the laser source onto the detected surface, and
a laser receiving device configured to receive the reflected laser from the detected surface to obtain at least two laser images of the detected surface;
a RGB image sensor configured to capture a RGB image of the detected surface; and
a processor connected to the scanning unit and the RGB image sensor, and configured to stitch the at least two laser images, and detect a defect of the detected surface based on the stitched laser image and the RGB image.

2. The detection module according to claim 1, wherein the laser projecting device further comprises an optical element arranged between the laser source and the MEMS micro scanning mirrors, and the laser emitted from the laser source is incident onto the MEMS micro scanning mirrors via the optical element.

3. The detection module according to claim 1 or 2, wherein the laser receiving device comprises a first laser receiver and a second laser receiver.

4. The detection module according to any preceding claim, further comprising a pattern projecting device connected to the processor and configured to project a configurable laser pattern towards an area where the defect is located based on different types of defects detected by the processor on the detected surface.

5. The detection module according to any preceding claim, further comprising:
a light filling device configured to selectively illuminate the detected surface; and
a display unit connected to the processor and configured to display a detection result of the detected surface.

6. The detection module according to any preceding claim, wherein the processor is further configured to:
detect whether the RGB image captured by the RGB image sensor is overexposed;
trigger a high dynamic range mode of the RGB image sensor in a case where the RGB image is overexposed;
combine a high exposure RGB image and a low exposure RGB image captured in the high dynamic range mode; and
detect the defect on the detected surface based on the combined RGB image and the stitched laser image.

7. The detection module according to claim 6, wherein the detecting whether the RGB image captured by the RGB image sensor is overexposed further comprises:
detecting whether a light intensity in the RGB image is greater than a predetermined threshold, and determining that the RGB image is overexposed in a case where the light intensity in the RGB image is greater than the predetermined threshold.

8. The detection module according to any preceding claim, wherein the processor is further configured to: determine a type and size of the defect based on a three-dimensional coordinate of the defect in a coordinate system of a detected object, and generate a detection report.

9. A detection device, comprising:
the detection module according to any one of claims 1 to 8; and
a housing, wherein the housing comprises a housing body, and the detection module is accommodated in the housing body.

10. A detection system, comprising:
a cloud platform;
an application terminal; and
the detection device according to claim 9, wherein the detection device is configured to communicate with the cloud platform and the application terminal.

11. The detection system according to claim 10, wherein the detection system is configured to automatically generate a maintenance report for the application terminal based on a detection result of the detection device and digital mock-up data of a detected object on the cloud platform.

12. A detection method, comprising:
emitting laser towards a detected surface, wherein the laser is emitted from a laser source and reflected onto the detected surface via at least two MEMS micro scanning mirrors;
receiving, by a laser receiving device, the laser reflected back from the detected surface to obtain at least two laser images of the detected surface;
stitching the at least two laser images;
obtaining a RGB image of the detected surface through a RGB image sensor; and
detecting a defect on the detected surface based on the stitched laser image and the RGB image.

13. The detection method according to claim 12, further comprising:
determining three-dimensional information of the defect; and
projecting a predetermined laser pattern towards the detected surface based on the three-dimensional information, to highlight an area where the defect is located with the predetermined laser pattern.

14. The detection method according to claim 12 or claim 13, wherein the detecting of the defect on the detected surface further comprises:
detecting whether the RGB image is overexposed;
triggering a high dynamic range mode of the RGB image sensor in a case where the RGB image is overexposed;
combining a high exposure RGB image and a low exposure RGB image captured in the high dynamic range mode; and
detecting the defect on the detected surface based on the combined RGB image and the stitched laser image.

15. The detection method according to claim 14, wherein the detecting whether the RGB image is overexposed further comprises:
detecting whether a light intensity in the RGB image is greater than a predetermined threshold, and determining that the RGB image is overexposed in a case where the light intensity in the RGB image is greater than the predetermined threshold.
